# FASCICULE DE BREVET EUROPEEN

(11) **EP 1 223 690 B1**
(45) Date de publication et mention de la délivrance du brevet: **06.10.2004**
(21) Numéro de dépôt: 02290082.3
(22) Date de dépôt: 14.01.2002
(51) Int. Cl.: H04B 7/185

(54) **Dispositif de transmission comportant une mémoire de masse pour stockage temporaire de flux d'information à temps différé**
Übertragungsanordnung mit Massenspeicher zur vorübergehender Speicherung zeitverschobener Nachrichtenströme
Device for transmission with mass storage for temporary memorisation of time delayed data flow

(30) Priorité: 15.01.2001 FR 0100461
(43) Date de publication de la demande: 17.07.2002
(73) Titulaire: ALCATEL, 75008 Paris (FR)
(72) Inventeur: Roullet, Laurent, 31500 Toulouse (FR); Lenormand, Régis, 31700 Blagnac (FR); Haddad, Mickael, 31500 Toulouse (FR); Delamotte, Luc, 31500 Toulouse (FR); Scheegans, Rémi, 92170 Vanves (FR)
(74) Mandataire: Chaffraix, Sylvain

(56) Documents cités:
- US-A- 5 574 720
- US-A- 5 999 534
- US-A- 6 026 092
- US-A- 6 091 709

## Description

La présente invention concerne un dispositif de transmission pour équipement de télécommunication. Elle s'applique particulièrement bien aux satellites de télécommunication.
Les satellites de télécommunication sont de plus en plus massivement utilisés afin de diffuser du contenu chez des utilisateurs finaux. Ce contenu peut, par exemple, être relatif à de la diffusion de programmes télévisés, ou à une session d'utilisation du réseau Internet.
Toutefois, l'invention trouve aussi son application pour d'autres équipements de télécommunication, notamment au sol.

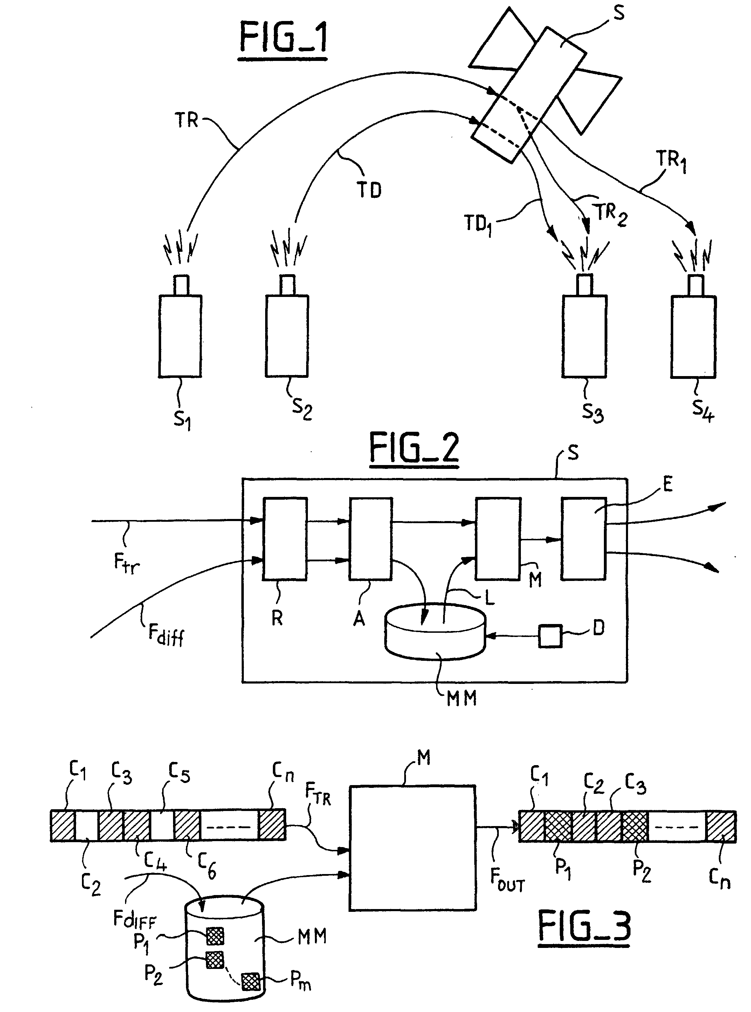

La figure 1 illustre l'utilisation d'un satellite de télécommunication. Les références S₁, S₂, S₃ et S₄ représentent 4 stations terrestres, c'est-à-dire des équipements de télécommunication en charge de faire le lien entre un ou plusieurs satellites de télécommunication et un réseau de télécommunication terrestre (non représenté). Ces stations terrestres peuvent émettre et recevoir des données de et vers un satellite de télécommunication S.
Ces données sont structurées sous la forme de cellules d'information, qui peuvent avoir plusieurs formes en fonction du protocole de communication mis en oeuvre. Un ensemble de cellules d'information transmises par une station terrestre à un satellite de télécommunication forme un flux d'information montant. Inversement, un ensemble de cellules d'information transmises par un satellite de télécommunication à une station terrestre forme un flux d'information descendant.
Ces flux d'information, qu'ils soient montants ou descendants, empruntent des canaux de communication. Ces canaux de communication peuvent être établis à la demande d'une station terrestre en déterminant une bande passante associée, c'est-à-dire en précisant le volume qu'est susceptible de représenter les flux d'informations véhiculés par ces canaux de communication.
Sur la figure 1, les références TD et TR représentent deux flux d'information montants, tandis que les références TR₁, TR₂ et TD₁ représentent trois flux d'information descendants.
On rappelle que, par ailleurs, les satellites de télécommunication peuvent posséder un rôle de duplication des flux d'information. Ainsi, le flux d'information TR est dupliqué à l'intérieur du satellite de télécommunication S, afin d'être transmis vers les deux stations terrestres S₃ et S₄ sous la forme de deux flux d'information descendants TR₁ et TR₂.
On peut distinguer deux types de flux d'information qui transitent par un satellite de télécommunication : des flux d'information de type temps-réel et des flux d'information de type temps différé.
Dans le cas d'une session d'utilisation du réseau internet, les transmissions d'informations multimédias basées sur le protocole de communication HTTP (*Hypertext Transfer Protocol*) sont de nature temps-réel, c'est-à-dire que l'usager veut avoir le délai le plus court possible entre la requête d'un document multimédia et son affichage sur l'écran de son terminal de communication. Par contre, le téléchargement d'un film depuis un serveur jusqu'au terminal de l'usager peut être effectué de façon différée.
Sur la figure 1, le flux d'information montant TR et les flux d'information descendants TR₁ et TR₂ sont des flux temps-réel. Le flux d'information montant TD et le flux d'information descendant TD₁ sont des flux à temps différé.
Ces différents flux d'information peuvent avoir des débits non constants dans le temps. Aussi, afin d'éviter les engorgements, généralement, on dimensionne le satellite et les canaux de communication sur le débit maximum possible, ou bien on dimensionne le nombre d'usagers admissibles par rapport au débit nécessaire pour acheminer en temps réel et simultanément les flux d'information.

Par exemple, un flux d'information temps réels est généralement associé à une bande passante qui a été réservée lors de l'établissement du canal de communication emprunté par ce flux d'information. Or, comme il a été dit, à un instant donné, ce flux temps réel n'a pas nécessairement le même débit que la bande passante réservée.
À titre d'exemple, le flux temps réel peut correspondre à une chaîne de télévision. Dans ce cas, il arrive généralement que les différentes émissions de la chaîne de télévision soient codées de façon différentes et avec différentes qualités : par exemple, les films seront codés avec une bonne qualité qui peut utiliser la totalité de la bande passante réservée, tandis que d'autres émissions, nécessitant une moins bonne qualité, n'en utiliseront qu'une partie.
Dans ce cas, la partie non utilisée est remplie de cellules dites « de bourrage » afin que cette sous-utilisation soit transparente pour les différents équipements du système.
Par conséquent, on voit bien que la bande passante réservée est en pratique rarement atteinte, de sorte qu'une importante partie de la capacité des dispositifs mis en jeu est sous-utilisée.
Il se pose donc le problème de la sous-utilisation de la capacité des dispositifs des satellites de communication, et notamment des canaux descendants.

Une première solution consiste à utiliser une technologie de type ATM (*Asynchronous Transfer Mode*) afin d'améliorer l'utilisation des ressources.
Toutefois, une telle solution n'est pas satisfaisante.
En effet, les débits à traiter à bord obligent à recourir à des technologies de type ASIC (*Application Specific Integrated Circuit*) spatial pour lesquelles les tailles des mémoires sont très limitées. En quelque sorte, les cellules arrivant dans le satellite ne font que transiter très brièvement et, pour éviter un engorgement des mémoires, il faut absolument contrôler le flux avant son émission par la station terrestre. Dans cette solution, avant l'envoi de tout paquet de données, on vérifie que la ressource est disponible.
Cela implique donc de déployer des équipements spécifiques au sol, ce qui est coûteux.

Des solutions de l'état de la technique comme les brevets américains US 6026092 ou US 6091709 décrivent des solutions d'optimisation des flux de données mais leur but est de minimiser les délais de transmission dans les équipements de réseau, et non d'optimiser l'utilisation des ressources de ces équipements et des ressources de transmission.

L'invention a donc pour but de résoudre le problème de la sous-utilisation des ressources d'un équipement de télécommunication, tel un satellite, tout en minimisant l'impact sur cet équipement et sur le réseau auquel il appartient.
L'invention a donc pour objet un dispositif de transmission pour équipement de télécommunication, comportant :
- un moyen de réception de flux d'information, le flux d'information étant composé de cellules d'information, certaines de ces cellules d'information pouvant être vides,
- Un mélangeur pour détecter les cellules d'informations vides et les remplacer par des cellules en attente,
- Un moyen d'émission destiné à émettre les cellules d'informations vers au moins un dispositif de réception situé en dehors de l'équipement de télécommunication.
Ce dispositif se caractérise en ce qu'il comporte en outre, un analyseur de flux pour déterminer si un flux d'information, reçu par le moyen de réception, est un flux d'information temps réel ou un flux d'information à temps différé, et pour stocker les cellules des flux d'information à temps différé dans un moyen de stockage de masse, et en ce que le mélangeur est prévu pour choisir les cellules en attente parmi les cellules stockées dans le moyen de stockage de masse.

L'invention a pour autre objet un procédé de transmission comportant des étapes de :
- Réception d'un flux d'information, le flux d'information étant composé de cellules d'information, certaines de ces cellules d'information pouvant être vides,
- Détection des cellules d'information vides,
- Remplacement des cellules d'information vides par des cellules en attente,
- Émission des cellules d'information
Ce procédé se caractérise en ce qu'il comporte en outre des étapes de:
- détermination si un flux d'information est un flux d'information temps-réel ou un flux d'information à temps différé,
- Stockage des cellules des flux d'information à temps différé, dans un moyen de stockage de masse,
Et en ce que les cellules en attente sont choisies parmi les cellules d'information stockées dans le moyen de stockage de masse.

Ainsi, dans le cadre d'une application à un satellite de télécommunication, les flux à temps différés sont stockés provisoirement dans une mémoire de masse et viennent remplacer les cellules vides des flux temps réel, de sorte que le maximum de la capacité des canaux descendants soient utilisé. L'invention permet donc une amélioration notable des performances du satellite de communication.

L'invention et ses avantages seront mieux compris à la lecture de la description d'une mise en oeuvre qui va être faite, en liaison avec les figures jointes.
La figure 1, déjà commentée, illustre le contexte dans lequel s'inscrit l'invention.
La figure 2 représente un satellite de télécommunication conforme à l'invention.
La figure 3 détaille le mélangeur selon l'invention.

La figure 2 illustre un contexte dans lequel est susceptible de s'insérer l'invention. Un satellite de télécommunication S peut recevoir des flux d'information de natures différentes, c'est-à-dire des flux d'information de type temps réel Fₜᵣ, ou des flux d'information à temps différé, F_{diff}. Ces flux d'information sont reçus par un moyen de réception R connu en soi. Ce moyen de réception transmet dès leur réception, les flux d'information reçus, à un analyseur de flux A qui détermine leur nature, c'est à dire s'ils sont de type temps réel ou de type à temps différé.
Selon une mise en oeuvre de l'invention, chaque flux d'information est affecté à une fréquence porteuse différente. Aussi, il est facile pour l'analyse de flux A de déterminer la nature du flux d'information reçu simplement en regardant sa fréquence porteuse.
Il est important de noter que ce flux d'information peut être de différentes natures. Il peut s'agir par exemple d'un flux d'information de données, ou bien d'un flux d'information de signalisation.

À l'issue de cette analyse, les flux d'information suivent des routes différentes en fonction de leur nature.
Les flux d'information à temps différé F_{diff} sont stockés dans un moyen de stockage de masse MM. À titre indicatif, sa taille peut être prévue de l'ordre de 2 méga-octets environ. Il peut notamment s'agir d'une mémoire de masse spatiale, proche de celles utilisées dans le contexte des satellites d'observation.

Les flux d'information à temps réels, quant à eux, sont directement transmis à un mélangeur M.
Ce mélangeur M est apte à détecter les cellules d'informations vides dans les flux temps réels qui lui sont transmis. Comme il a été précédemment dit, les flux temps réel peuvent en effet contenir des cellules vides (« de bourrage ») qui représentent l'écart entre le débit réellement nécessaire et la bande passante réservée.
Un moyen de connexion L est prévu pour transmettre au mélangeur M, des cellules stockées dans le moyen de stockage de masse MM.
Le rôle du mélangeur est alors de remplacer les cellules d'information vides qu'il a détecté par des cellules d'information issues du moyen de stockage de masse MM via le moyen de connexion L.

La figure 3 illustre de façon plus précise le fonctionnement du mélangeur M.
Sur cette figure, on a représenté un flux d'information temps réel F_{TR} composé d'une suite de cellules d'information C₁, C₂, C₃, C₄, C₅... Cₙ.
Un autre flux d'information, à temps différé, F_{diff} est directement stocké dans le moyen de stockage de masse MM. Ce moyen de stockage de masse contient des cellules d'information P₁, P₂...Pₘ appartenant à ce flux à temps différé.
Le mélangeur M a comme entrée ces deux flux d'information, et sa sortie est un nouveau flux d'information Fₒᵤₜ basé sur le flux d'information temps réel. Chaque cellule d'information du flux d'information temps-réel qui était vide (non hachuré sur la figure 3) est remplacée par une cellule d'information préalablement stockée dans le moyen de stockage de masse.

Ainsi le flux d'information de sortie Fₒᵤₜ est constituée des cellules d'information C₁, P₁ (puisque C₂ est vide), C₃, C₄, P₂ (puisque C₅ est vide)... Cₙ.

On remarque que la transmission du flux d'information temps-réel n'est absolument pas ralentie par ce mécanisme et qu'en fait la transmission du flux d'information à temps différé est effectuée de façon totalement transparente pour lui.

Ainsi qu'il est illustré par la figure 2, le flux d'information de sortie est ensuite envoyé à un moyen d'émission E qui émet les cellules d'information à un dispositif de réception situé en dehors du satellite de transmission lui-même (typiquement une station terrestre, mais il peut aussi éventuellement s'agir d'un autre satellite de télécommunication comme, par exemple, dans le cadre d'une constellation de satellites).

Selon une mise en oeuvre de l'invention, le mélangeur M dispose de moyens pour choisir les cellules en attente en fonction de règles d'ordonnancement temporel. Ainsi est-il possible de définir un ordonnancement temporel pour chaque flux à temps différé. Cet ordonnancement temporel est typiquement une date d'émission.

Un autre avantage de l'invention est qu'il est facile de mettre en oeuvre une diffusion de flux d'information à temps différé vers plusieurs destinataires. Ce type de fonction est connu, en langue anglaise, sous le nom de multi-casting.
En effet, les cellules d'information correspondant à des flux d'information à temps différé sont stockées dans le moyen de stockage de masse MM. Aussi, elles peuvent être lues à plusieurs reprises par le mélangeur M et émises par le moyen d'émission E à destination de plusieurs destinataires.
Il n'est donc pas nécessaire d'émettre plusieurs fois la même cellule d'information depuis une station terrestre vers le satellite de télécommunication S : la duplication est faite directement dans le satellite de télécommunication. Par conséquent, une importante économie de la bande passante des flux montants est réalisée.

Selon une mise en oeuvre préférentielle de l'invention, le satellite de télécommunication comporte de surcroît un moyen D pour effacer les cellules d'information stockées dans le moyen de stockage de masse M. Son rôle est d'éviter le remplissage total de ce moyen de stockage de masse.
Normalement, ce moyen D pour effacer est simplement mis en oeuvre pour une cellule d'information donnée lorsque celle-ci a été émise à ou au dispositif(s) de réception (station terrestre, autre satellite...).

Dans le cas d'une transmission vers un unique destinataire, la cellule d'information est effacée dès sa première lecture par le moyen de connexion L.

## Revendications

1. Dispositif de transmission pour équipement de télécommunication, comportant :
• un moyen de réception (R) de flux d'information, ledit flux d'information étant composé de cellules d'information, certaines de ces cellules d'information pouvant être vides,
• Un mélangeur (M) pour détecter les cellules d'informations vides et les remplacer par des cellules en attente,
• Un moyen d'émission (E) destiné à émettre les cellules d'informations vers au moins un dispositif de réception situé en dehors dudit équipement de télécommunication,
**caractérisé en ce qu'**il comporte en outre, un analyseur de flux (A), pour déterminer si un flux d'information, reçu par ledit moyen de réception, est un flux d'information temps réel ou un flux d'information à temps différé, et pour stocker les cellules des flux d'information à temps différé dans un moyen de stockage de masse (MM), et **en ce que** ledit mélangeur est prévu pour choisir lesdites cellules en attente parmi les cellules stockées dans ledit moyen de stockage de masse.

2. Dispositif de transmission selon la revendication 1, comportant de surcroît, un moyen (D) pour effacer une cellule d'information stockée dans ledit moyen de stockage de masse, lorsque celle-ci a été émise, par ledit moyen d'émission, vers ledit au moins dispositif de réception.

3. Dispositif de transmission selon l'une des revendications précédentes selon lequel ledit mélangeur possède un moyen pour choisir lesdites cellules en attente en fonction de règles d'ordonnancement temporel.

4. Procédé de transmission comportant des étapes de
• Réception d'un flux d'information, ledit flux d'information étant composé de cellules d'information, certaines de ces cellules d'information pouvant être vides,
• Détection des cellules d'information vides,
• Remplacement desdites cellules d'information vides par des cellules en attente,
• Émission des cellules d'information
**Caractérisé en ce qu'**il comporte en outre des étapes de
• détermination si un flux d'information est un flux d'information temps-réel ou un flux d'information à temps différé,
• Stockage des cellules des flux d'information à temps différé, dans un moyen de stockage de masse (MM),
Et **en ce que** lesdites cellules en attente sont choisies parmi les cellules d'information stockées dans ledit moyen de stockage de masse.

5. Procédé selon la revendication précédente, comportant en outre une étape d'effacement d'une cellule d'information stockée lorsque celle-ci a été émise.

6. Procédé selon l'une des revendications 4 ou 5, selon lequel lesdites cellules en attente sont choisies en fonction de règles d'ordonnancement temporel.

## Claims

1. A relay for use in telecommunications equipment, said relay comprising:
• a receiver (R) adapted to receive an information stream consisting of information cells, some of which can be empty,
• a mixer (M) adapted to detect the empty information cells and replace them with waiting cells, and
• a transmitter (E) adapted to transmit the information cells to a receiver outside said telecommunications equipment,
which relay is **characterized in that** it further comprises a stream analyzer (A) for determining if an information stream received by said receiver is a real-time information stream or a differed-time information stream and for storing differed-time information stream cells in a mass memory (MM) and **in that** said mixer is adapted to choose said waiting cells from among the cells stored in said mass memory.

2. A relay according to claim 1, further comprising a deleter (D) for deleting an information cell stored in said mass memory when it has been sent by said transmitter to said receiver.

3. A relay according to either preceding claim, wherein said mixer is adapted to choose said waiting cells as a function of time scheduling rules.

4. A method comprising the steps of:
• receiving an information stream made up of information cells, some of which can be empty,
• detecting empty information cells,
• replacing said empty information cells with waiting cells, and
• transmitting information cells,
which method is **characterized in that** it further comprises the steps of:
• determining if an information stream is a real-time information stream or a differed-time information stream, and
• storing differed-time information stream cells in a mass memory,
and **in that** said waiting cells are chosen from among the stored information cells in said mass memory.

5. A method according to the preceding claim, further comprising a step of deleting a stored information cell when it has been sent.

6. A method according to either claim 4 or claim 5, wherein in said waiting cells are chosen as function of time scheduling rules.

## Patentansprüche

1. Übertragungsanordnung für Telekommunikationseinrichtungen, aufweisend:
• eine Empfangsvorrichtung (R) für Nachrichtenströme, wobei der Nachrichtenstrom aus Nachrichtenzellen besteht, wobei einige dieser Nachrichtenzellen leer sein können;
• einen Mischer (M), um die leeren Nachrichtenzellen zu erkennen und sie durch wartende Zellen zu ersetzen;
• eine Sendevorrichtung (E), welche die Aufgabe hat, die Nachrichtenzellen zu mindestens einer außerhalb der Telekommunikationseinrichtung liegenden Empfangsanordnung zu senden;
**dadurch gekennzeichnet, dass** sie außerdem einen Nachrichtenstrom-Analysator (A) aufweist, um festzustellen, ob ein Nachrichtenstrom, der von der Empfangsvorrichtung empfangen wurde, ein Echtzeit-Nachrichtenstrom oder ein zeitverschobener Nachrichtenstrom ist, und um die Zellen der zeitverschobenen Nachrichtenströme in einer Massenspeichervorrichtung (MM) zu speichern, sowie dadurch, dass der Mischer dafür vorgesehen ist, die wartenden Zellen aus den in der Massenspeichervorrichtung gespeicherten Zellen auszuwählen.

2. Übertragungsanordnung nach Anspruch 1, zusätzlich aufweisend eine Vorrichtung (D) zum Löschen einer in der Massenspeichervorrichtung gespeicherten Zelle, nachdem diese durch die Sendevorrichtung an die Empfangsanordnung gesendet wurde.

3. Übertragungsanordnung nach einem der vorhergehenden Ansprüche, wobei der Mischer eine Vorrichtung aufweist, um die wartenden Zellen nach zeitlichen Steuerungsregeln auszuwählen.

4. Übertragungsverfahren, das folgende Schritte aufweist:
• Empfang eines Nachrichtenstroms, wobei der Nachrichtenstrom aus Nachrichtenzellen besteht, wobei einige dieser Nachrichtenzellen leer sein können;
• Erkennung von leeren Nachrichtenzellen;
• Ersetzung der leeren Nachrichtenzellen durch wartende Zellen;
• Senden der Nachrichtenzellen;
**dadurch gekennzeichnet, dass** es außerdem die folgenden Schritte aufweist:
• Feststellung, ob ein Nachrichtenstrom ein Echtzeit-Nachrichtenstrom oder ein zeitverschobener Nachrichtenstrom ist;
• Speicherung der Zellen von zeitverschobenen Nachrichtenströmen in einer Massenspeichervorrichtung (MM);
sowie dadurch, dass die wartenden Zellen aus den in der Massenspeichervorrichtung gespeicherten wartenden Zellen ausgewählt werden.

5. Verfahren nach dem vorhergehenden Anspruch, außerdem aufweisend einen Schritt zum Löschen einer gespeicherten Nachrichtenzelle, nachdem diese gesendet wurde.

6. Verfahren nach einem der Ansprüche 4 oder 5, nach dem diese wartenden Zellen nach zeitlichen Steuerungsregeln ausgewählt werden.
